(19) Europäisches Patentamt
European Patent Office
Office européen des brevets

(11) Veröffentlichungsnummer: **0 313 592 B1**

(12) **EUROPÄISCHE PATENTSCHRIFT**

(45) Veröffentlichungstag der Patentschrift:
27.02.91 Patentblatt 91/09

(51) Int. Cl.⁵: **C01B 17/90, C02F 1/70**

(21) Anmeldenummer: **88903163.9**

(22) Anmeldetag: **26.04.88**

(86) Internationale Anmeldenummer:
**PCT/CH88/00081**

(87) Internationale Veröffentlichungsnummer:
**WO 88/08405 03.11.88 Gazette 88/24**

(54) **VERFAHREN ZUR ABSCHEIDUNG VON CHROM UND/ODER VANADIUM AUS ABFALLSCHWEFELSÄURE.**

(30) Priorität: 30.04.87 CH 1649/87

(43) Veröffentlichungstag der Anmeldung:
03.05.89 Patentblatt 89/18

(45) Bekanntmachung des Hinweises auf die
Patenterteilung:
27.02.91 Patentblatt 91/09

(84) Benannte Vertragsstaaten:
**BE DE FR GB IT**

(56) Entgegenhaltungen:
**CH-A- 409 800**
**DE-A- 2 446 117**
**DE-A- 2 729 756**
**US-A- 3 575 853**

(73) Patentinhaber: **SULZER-ESCHER WYSS AG**
**Hardstrasse 319**
**CH-8023 Zürich (CH)**

(72) Erfinder: **WIESMANN, Hans**
**Imbisbühlstrasse 109**
**CH-8049 Zürich (CH)**
Erfinder: **BANSAL, Parmanand**
**Im Gatter 4**
**CH-8121 Benglen (CH)**

(74) Vertreter: **Paschedag, Hansjoachim**
**c/o Escher Wyss AG Patentabteilung Postfach**
**CH-8023 Zürich (CH)**

## Beschreibung

Die Erfindung betrifft ein erfahren zur Abscheidung von Chrom und/oder Vanadium aus eingedampfter Abfallschwefelsäure von der Titandioxid-Produktion durch Alterung nach dem Eindampfen.

Bei der Titandioxid-Herstellung fällt Abfallschwefelsäure mit einer Konzentration beispielsweise zwischen 16 und 28% an, welche Metallverunreinigungen in Mengen von teilweise bis zu einigen Gewichts-% enthält. Beispielsweise enthält die bei der Titandioxid-Herstellung anfallende Abfallschwefelsäure typischerweise als Verunreinigungen Eisen, Aluminium, Magnesium, Titan, Chrom, Vanadium, Mangan, u.a., welche bei einer Wiederverwendung der Schwefelsäure entfernt werden müssen.

### Stand der Technik

Aus verschiedenen Publikationen, beispielsweise DE-A-2 807 308, DE-A-2 807 360, oder DE-A-2 807 304 ist es bekannt, eine solche Abfallschwefelsäure zur Wiederverwendung aufzubereiten, indem die Dünnsäure durch Eindampfen auf eine Konzentration beispielsweise im Bereich von 65 bis 70% eingedampft wird und anschliessend durch einen Alterungsprozess die verschiedenen Metallverunreinigungen ausgefällt und abgeschieden werden. Durch eine solche Alterung können die meisten Metallverunreinigungen innert einigen Stunden bis Tagen in einem solchen Masse abgeschieden werden, dass die aufbereitete Schwefelsäure zur Wiederverwendung geeignet ist.

Es zeigte sich jedoch, dass insbesondere Chrom und Vanadium hierbei meistens nur äusserst langsam abgebaut wird. Beispielsweise sind bei einer Ausgangskonzentration von Chrom zwischen 300 und 400 ppm nach einwöchiger Alterung immer noch Konzentrationen über 200 ppm nachweisbar. Schwefelsäure mit solchen Chrom-Mengen und hohem Vanadium-Gehalt ist jedoch für die Wiederverwendung beispielsweise in der Farbstoffindustrie, insbes. bei der Herstellung von Titandioxid wegen ihrer stark färbenden Wirkung nur bedingt verwendungsfähig. Hierzu wäre eine Herabsetzung der Chrom-Konzentration auf Werte unterhalb von 200 ppm, vorzugsweise unterhalb 100 ppm und eine entsprechende Reduktion des Vanadium-Gehaltes, wünschenswert.

Aus der DE-A-2 618 121 und der DE-A-2 729 756 ist es bekannt, die Entfernung von Chrom aus Abfallschwefelsäure von der Titandioxid-Herstellung durch Zugabe von Metallsulfaten, insbesondere Eisen(II)-Sulfat bei der Eindampfung zu fördern. Die Chromabscheidung ist bei diesen Verfahren jedoch in manchen Fällen noch nicht ausreichend.

Aus der DE-A-2 446 117 oder der US-A-3 575 853 ist es bekannt, Chrom-Komplexverbindungen und Chromate aus Industrieabwässern, z.B. von der galvanischen Industrie, wie der Metall-Verchromung, durch Berührung mit Aluminium-Blechen oder -Partikeln abzuscheiden oder zu flockulieren. Die Anwendung auf die Reinigung von Abfallschwefelsäure aus der Titandioxid-Produktion, in der Chrom offenbar in anderer Form vorliegt, zeigt jedoch meist keinen ausreichenden Erfolg.

Weiter ist es bekannt, z.B. aus der CH-A-409 800, der DE-A-578 034, und der JP-A-79/65 194, diverse andere Schwermetalle, wie Kupfer, Eisen, Quecksilber oder Blei durch Einwirkung von Aluminium aus schwefelsäurehaltigen Abwässern abzuscheiden bzw. auszufällen. Auch nach diesen Verfahren ist die Entfernung von Chrom ungenügend, um die Schwefelsäure für die Titandioxid-Herstellung wiederverwenden zu können.

### Darstellung der Erfindung

Die Erfindung setzt sich die Aufgabe, die erwähnten Nachteile des Standes der Technik zu beseitigen und ein Verfahren anzugeben, welches eine verbesserte Abscheidung von Chrom und/oder Vanadium aus eingedampfter Schwefelsäure von der Titandioxid-Produktion innert kürzerer Zeiten und die Erreichung einer niedrigeren Konzentration gestattet, so dass sich die gereinigte Schwefelsäure ohne Störung durch den Restgehalt von Chrom und Vanadium in der Titandioxid-Produktion wiederverwenden lässt.

Erfindungsgemäss wird diese Aufgabe dadurch gelöst, dass der Abfallschwefelsäure nach dem Eindampfen und vor der Alterung metallisches Aluminium mit aktiver Oberfläche zugegeben wird, welches durch Zerkleinerung, insbesondere durch Zerspanen oder Pulverisierung von Aluminium-Teilen kurz vor der Zugabe, d.h. höchstens eine vorbestimmte Zeit vor der Zugabe erreicht wird.

In der Regel genügt es zur Erhaltung einer aktiven Oberfläche, wenn die Zerkleinerung höchstens vier Stunden vor der Zugabe vorgenommen wird.

Zusätzlich kann die Chrom- und Vanadium-Abscheidung durch Zusatz von Impfkristallen gefördert werden, welche direkt aus dem aus der Schwefelsäure abgeschiedenen Feststoff gewonnen werden.

Es wird angenommen, dass die vorteilhafte Wirkung der Zugabe von Aluminium mit aktiver Oberfläche auf das in besonderer Form in der Titandioxid-Abfallschwefelsäure vorliegende Chrom auf dem stark negativen Redox-Potential des aktiven Aluminiums beruht, wodurch eine Redox-Reaktion bewirkt wird. Die höherwertigen, z.B. 6-3-wertigen Chrom-Ionen werden dadurch offenbar zu niederwertigen, z.B. dreiwertigen Ionen oder metallischem Chrom reduziert. So sind z.B. einige Salze des dreiwertigen Chroms, insb. Sulfate, sowie Calciumchromit wesentlich schlechter löslich als die entsprechenden Salze des sechswertigen Chroms, so dass durch die Reduktion mittels aktivem Aluminium überraschenderweise eine schnellere, mengenmässig grössere Ausfällung von Chromsalzen aus der genannten speziellen Abfallsäure stattfindet als mit vorbekannten Verfahren. Aehnliches gilt für die Abscheidung von Vanadium aus Abfallschwefelsäure der genannten Provenienz.

Die notwendige Zugabemenge von Aluminium liegt in der Regel bei 0,2 bis 0,3 Gewichts-%, je nach Ausgangsmaterial. Durch eine erhöhte Temperatur kann die Abscheidung von Chrom weiter gefördert werden. Zwar erfolgt auch bei Temperaturen von 40°C bereits eine deutlich verbesserte Chrom-Abscheidung, jedoch lassen sich erheblich günstigere Ergebnisse bei Temperaturen bis 60°C erreichen. Unter diesen Bedingungen lässt sich bei einem Ausgangsmaterial mit einem Chromgehalt von über 300 ppm eine Herabsetzung der Chrom-Konzentration im Konzentrat unter 200 ppm innert 24 Stunden und unter 100 ppm innert 2 bis 4 Tagen erreichen, während die Herabsetzung auf 200 ppm ohne Aluminiumzusatz eine Woche benötigte und auf 100 ppm überhaupt nicht erreicht werden konnte.

## Beispiel

Das Ausgangsmaterial, eine 22%-ige Schwefelsäure aus einem Ilmenit-/Schlacken-Aufschluss wurde durch Erhitzen auf den jeweiligen Siedepunkt bis maximal 150°C auf einen Schwefelsäuresalzbrei mit einem freien $H_2SO_4$-Gehalt von 63,9% und folgenden Metallverunreinigungen im Filtrat eingedampft :

| Fe | 0,40 | % |
| Al | 0,45 | % |
| Mg | 0,48 | % |
| Cr | 320 | ppm |
| V | 300 | ppm |
| Mn | 300 | ppm |
| Ti | 0,11 | % |

Ein Teil dieser Versuchssäure wurde ohne Zusätze bei 55°C Während einer Woche gealtert (Probe 1). Einem zweiten Teil der Versuchssäure wurden 2 Gewichts-% Impfkristalle, aus der ausgefällten gealterten Substanz eines früheren Versuches, zugegeben und anschliessend bei 55°C bzw. 40°C gealtert (Proben 2 und 3). Einem weiteren Teil der Versuchssäure wurden zusätzlich 0,3 Gewichts-% Aluminiumspäne zugesetzt, welche weniger als 1 Stunde vor der Zugabe zerspant worden waren (Probe 4). Beobachtet wurde bei den vier genanten Ansätzen die zeitliche Abnahme des Chromgehaltes in den vier bezeichneten Proben, mit dem folgenden Resultat :

## VERGLEICHSBEISPIELE

| Alterungs Dauer | Probe 1 -/-/55°C | Probe 2 -/2%/40°C | Probe 3 -/2%/55°C | Probe 4 0,3%/2%/55°C |
|---|---|---|---|---|
| Stunden | ppm Cr | ppm Cr | ppm Cr | ppm Cr |
| 0 | 320 | 320 | 320 | 320 |
| 19 | 275 | 290 | 270 | 230 |
| 39 | 270 | 280 | 245 | 170 |
| 63 | 265 | 275 | 220 | 130 |
| 135 | 260 | 210 | 170 | 90 |

Das vorstehende Versuchsresultat zeigt, dass sich mit einer erfindungsgemässen Zugabe von 0,3% aktivem Aluminium der Chromgehalt bereits innert 24 Stunden in den Bereich des in vielen Fällen noch zulässigen Grenzwertes von 200 ppm Cr reduzieren lässt. Nach weniger als 4 Tagen Alterung sinkt der Chromgehalt nahezu auf den für die Wiederverwendung der Säure meist ausreichenden Wert unter 100 ppm. Bei den Vergleichsbeispielen lässt sich lediglich bei Zugabe von Impfkristallen in einer Menge von 2 Gewichts-% und einer Temperatur von 55°C in 4 Tagen eine Reduktion des Chromgehaltes unter 200 ppm erreichen. Bei dem Vergleichsbeispiel ohne Zusätze konnte dieser Wert auch nach einer Alterungszeit von einer Woche nicht erzielt werden.

Wie die Vergleichsbeispiele 1 bis 3 zeigen, ist der Chrom-Ausfall bei einer höheren Temperatur (55°C) etwas stärker als bei niedrigerer Temperatur (40°C). Eine Temperaturerhöhung allein reicht jedoch auch bei Alterungszeiten von einer Woche nicht aus, um den Chromanteil auf unter 100 ppm zu reduzieren.

Wie weitere Versuche zeigten, hat eine erhöhte Zugabe von aktivem Al einen noch schnelleren Chromabbau zur Folge. Die Zugabe von bereits am Vortage hergestellten Al-Spänen lieferte dagegen ein nur unwesentlich besseres Ergebnis als die Probe 3.

Aehnliche Verhältnisse gelten im übrigen für den Abbau der konzentration gewisser anderer, ebenfalls störender, ähnlich schwer ausfällbarer Verunreinigunger, insbesondere Vanadium, wobei bei diesem vor allem auch der gezielte Einsatz von gut gealterten Impfkristallen mithilft.

## Ansprüche

1. Verfahren zur Abscheidung von Chrom und/oder Vanadium aus eingedampfter Abfallschwefelsäure von der Titandioxid-Produktion durch Alterung nach dem Eindampfen, dadurch gekennzeichnet, dass der Abfallschwefelsaure nach dem Eindampfen und vor der Alterung metallisches Aluminium mit aktiver Oberfläche zugegeben wird, welches höchstens eine vorbestimmte Zeit vor der Zugabe zerkleinert, insbesondere zerspant oder pulverisiert wird.

2. Verfahren nach Anspruch 1, dadurch gekennzeichnet, dass die Zerkleinerung, Zerspanung bzw. Pulverisierung innert höchstens vier Stunden vor der Zugabe erfolgt.

3. Verfahren nach Anspruch 1 oder 2, dadurch gekennzeichnet, dass die Menge des zugegebenen Aluminiums mindestens 0,2 Gewichts-% beträgt.

4. Verfahren nach Anspruch 3, <u>dadurch gekennzeichnet</u>, dass die Menge des zugegebenen Aluminiums in der Grössenordnung von 0,3 Gewichts-% liegt.

5. Verfahren nach einem der Ansprüche 1 bis 4, <u>dadurch gekennzeichnet</u>, dass die Alterung bei einer Temperatur im Bereich von 40 bis 70°C vorgenommen wird.

6. Verfahren nach Anspruch 5, <u>dadurch gekennzeichnet</u>, dass die Alterung bei einer Temperatur in der Grössenordnung von 55°C vorgenommen wird.

7. Verfahren nach einem der Ansprüche 1 bis 6, <u>dadurch gekennzeichnet</u>, dass der Abfallschwefelsäure zusätzlich Impfkristalle zugegeben werden, welche aus dem aus der Säure ausgefallenen Material gewonnen werden.

8. Verfahren nach Anspruch 7, <u>dadurch gekennzeichnet</u>, dass man Impfkristalle in einer Menge von 1.5 bis 2.5 Gew. % zugibt.

9. Verfahren nach einem der Ansprüche 1 bis 8, <u>dadurch gekennzeichnet</u>, dass die Alterungszeit höchstens vier Tage beträgt.

## Revendications

1. Procédé de séparation du chrome et/ou du vanadium contenus dans de l'acide sulfurique résiduel concentré par évaporation, provenant de la production de dioxyde de titane, par vieillissement après la concentration par évaporation, **caractérisé** par le fait d'ajouter à l'acide sulfurique résiduel, après la concentration par évaporation et avant le vieillissement, de l'aluminium métallique à surface active, ayant été broyé, en particulier réduit en copeaux ou pulvérisé, au plus tard à un moment prédéterminé avant l'addition.

2. Procédé selon la revendication 1, caractérisé en ce que le broyage, la réduction en copeaux ou la pulvérisation a lieu au plus tard dans les quatre heures avant l'addition.

3. Procédé selon la revendication 1 ou 2, caractérisé en ce que la quantité d'aluminium ajouté est d'au moins 0,2% en poids.

4. Procédé selon la revendication 3, caractérisé en ce que la quantité d'aluminium ajouté est de l'ordre de grandeur de 0,3% en poids.

5. Procédé selon une des revendications 1 à 4, caractérisé en ce que le vieillissement est effectué à une température comprise entre 40 et 70°C.

6. Procédé selon la revendication 5, caractérisé en ce que le vieillissement est effectué à une température de l'ordre de grandeur de 55°C.

7. Procédé selon une des revendications 1 à 6, caractérisé par le fait d'ajouter en outre à l'acide sulfurique résiduel des cristaux d'inoculation extraits de la matière précipitée à partir de l'acide.

8. Procédé selon la revendication 7, caractérisé en ce qu'on ajoute des cristaux d'inoculation en quantité de 1,5 à 2,5% en poids.

9. Procédé selon une des revendications 1 à 8, caractérisé en ce que la période de vieillissement est au maximum de quatre jours.

## Claims

1. Process for separating chromium and/or vanadium from concentrated sulphuric acid waste from titanium dioxide production by ageing after concentration, characterised in that metallic aluminium with an active surface is added to the sulphuric acid waste after concentration and before ageing, which aluminium is crushed, in particular splintered off or powdered, at most a predetermined time before addition.

2. Process according to Claim 1, characterised in that the crushing, splintering or powdering takes place within at most four hours before addition.

3. Process according to Claim 1 or 2, characterised in that the quantity of the aluminium which is added is at least 0.2% by weight.

4. Process according to Claim 3, characterised in that the quantity of aluminium added is of the order of 0.3% by weight.

5. Process according to one of Claims 1 to 4, characterised in that the ageing is carried out at a temperature in the range of 40 to 70°C.

6. Process according to Claim 5, characterised in that the ageing is carried out at a temperature of the order of 55°C.

7. Process according to one of Claims 1 to 6, characterised in that seed crystals are additionally added to the sulphuric acid waste, which crystals are obtained from the material precipitated from the acid.

8. Process according to Claim 7, characterised in that seed crystals are added in a quantity of 1.5 to 2.5% by weight.

9. Process according to one of Claims 1 to 8, characterised in that the ageing time is at most four days.